# EUROPEAN PATENT APPLICATION

(11) **EP 2 169 609 A1**
(43) Date of publication of application: **31.03.2010**
(21) Application number: 09012225.0
(22) Date of filing: 25.09.2009
(51) Int. Cl.: G06Q 30/00

(54) **Method and system for realizing a video shop**

(30) Priority: 25.09.2008 CN 200810222999
(71) Applicant: Huawei Technologies Co., Ltd., Longgang District, Shenzhen, Guangdong 518129 (CN)
(72) Inventor: Lin, Lin, Shenzhen Guangdong 518129 (CN); Wu, Yanyu, Shenzhen Guangdong 518129 (CN); Hu, Xiaoqing, Shenzhen Guangdong 518129 (CN)
(74) Representative: Pfenning, Meinig & Partner GbR

(57) **Abstract**

A method and a system for implementing a video shop are provided according to one embodiment of the present disclosure. The method and system can be applied in network communication field. The method includes receiving a call request sent by a user over a phone domain, putting through the user's call and keeping the user connected; providing the user with a shopping guidance and providing the user with a service associated with a selection made in accordance with the shopping guidance by the user; and receiving a purchase order made in accordance with the service by the user and providing the user with a payment service. A system for realizing a video shop is also provided according to one embodiment of the present disclosure. The method and system have a sound operability, high level security and high reliability.

## Description

### FIELD OF THE INVENTION

The present disclosure relates to network communication field, and more specifically, to method and system for realizing a video shop.

### BACKGROUND

With the development of technology and the prevalence of the Internet, more and more things can be realized on the Internet. For instance, traditional shopping can also be realized over the Internet. An online shopping website over the Internet is a shopping website based on Internet technology. Such online shopping is realized by providing video files on the website over the Internet through which consumers may be able to shop online by performing various operations. The video file may be a dynamic video file, such as video, movie, etc., or may be a static video file, such as picture.

It is discovered that the above conventional approach encounters at least one of the following problems.

1. Poor Operability

Since the technique is accomplished by manipulating computers, the user is required to have computer operating skills and online operating skills.

2. Poor Security

Since the technique is focused on Internet based shopping websites, viruses and Trojan horses may impose a big threat to user information and user property as well.

### SUMMARY

A method and a system for realizing a video shop are provided according to embodiments of the present disclosure. The method and system pose no requirement on the users' computer skills or on-line operating skills and meanwhile have a sound security and reliability.

The method for realizing a video shop according to one embodiment of the present disclosure includes:
receiving a call request sent by a user over a phone domain, putting through the user's call and keeping the user connected;
providing the user with a shopping guidance and providing the user with a service associated with a selection made in accordance with the shopping guidance by the user;
receiving a purchase order made in accordance with the service by the user and providing the user with a payment service.

The system for realizing a video shop according to one embodiment of the present disclosure includes:
a receiving unit, configured to receive a call request sent by a user over a phone domain;
a connecting unit, configured to get the user through the call and keep the user connected;
a shopping guidance unit, configured to provide the user with a shopping guidance while the user is kept connected and provide the user with a service associated with a selection made in accordance with the shopping guidance by the user, wherein the receiving unit is further configured to receive a purchase order made in accordance with the service by the user; and
a payment unit, configured to provide the user with a payment service after a purchase order made in accordance with the service by the user is received.

As can be seen from the technical solutions provided above, the technical solutions according to the embodiments of the present disclosure include receiving a call request sent by a user over a phone domain, putting through the user's call and keeping the user connected; providing the user with a shopping guidance and providing the user with a service associated with a selection made in accordance with the shopping guidance by the user; and receiving a purchase order made in accordance with the service by the user and providing the user with a payment service. In the above technical solution, since the user can operate over the phone, the user does not need to connect to the internet with a computer. Therefore, the present disclosure enjoys a sound operability and eliminates the need for computer skills and online operating skills and thus facilitates the user's operations. Furthermore, since the video shop is based on phone domain, it is of high reliability. In addition, since the user accesses the video shop without connecting to the internet, the user won't be attacked by Internet virus and Trojan horse. Therefore, the system has a high level security.

### BRIEF DESCRIPTION OF THE DRAWINGS

Figure 1 is a system block diagram of realizing a video shop according to one embodiment of the present disclosure;

Figure 2 is a system block diagram of realizing a video shop according to one embodiment of the present disclosure;

Figure 3 is a flowchart of a method for realizing a video shop according to one embodiment of the present disclosure; and

Figure 4 is a flowchart of a method for realizing a video shop according to one embodiment of the present disclosure.

### DETAILED DESCRIPTION

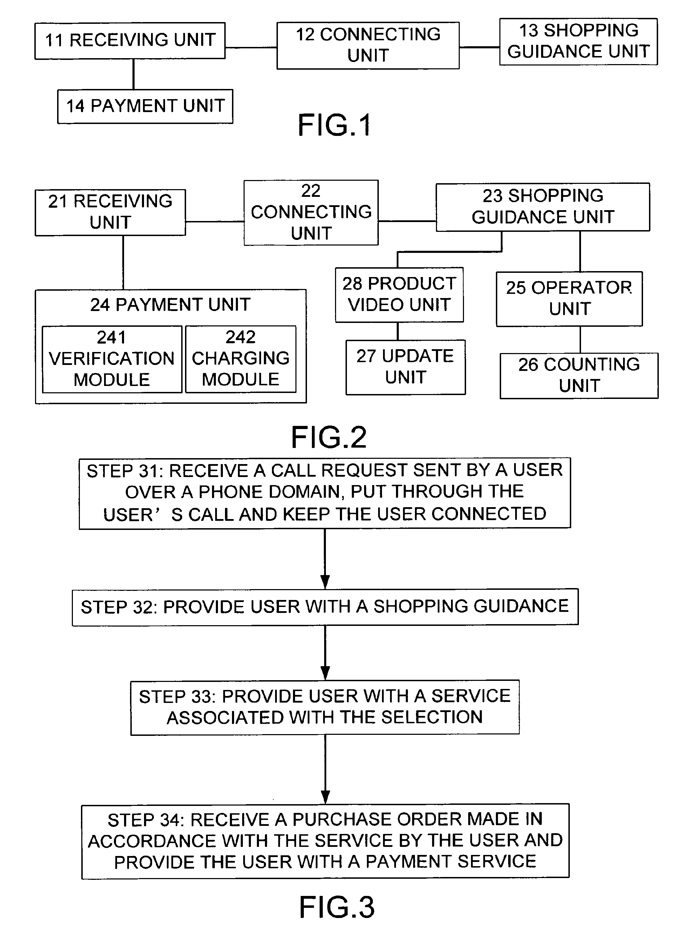

A system for realizing a video shop is provided according to one embodiment of the present disclosure. As illustrated in Figure 1, the system includes a receiving unit 11, configured to receive a call request sent by a user over a phone domain; a connecting unit 12, configured to get the user through the call and keep the user connected after the receiving unit 11 receives the call request; a shopping guidance unit 13, configured to provide the user with a shopping guidance while the connecting unit 12 keeps the user connected and provide the user with a service associated with a selection made in accordance with the shopping guidance by the user, wherein the receiving unit 11 is further configured to receive a purchase order sent by the user based on the service; a payment unit 14, configured to provide the user with a payment service after the receiving unit 11 receives the purchase order sent by the user based on the service.

To better present the technical solutions according to the embodiments of the present disclosure, the technical solutions are illustrated in detail in connection with specific embodiments.

A system for realizing a video shop is provided according to one embodiment of the present disclosure. One scenario of the embodiment is that the video shop system stores a video file having various products and is able to provide various video capabilities such as video playback, video recording, video conference, video multi-imaging, overlay of video and text, etc. The system may also provide maintenance means for data configuration, call statistics, warning, logging, message tracking, etc. These means are used for system maintenance, daily management and operation on the system by the administrator. As illustrated in Figure 2, the system includes:
a receiving unit 21, configured to receive various call requests sent by a user over a phone domain;
a connecting unit 22, configured to convert, after the receiving unit 21 receives the call request, the call request to a unified call model, get the user through the call, and keep the user connected;
a shopping guidance unit 23, configured to provide, while the user is kept connected, an automatic shopping guidance to the user without human involvement, guiding the user to browse, view, purchase products, and provide, after receiving a selection made in accordance with the shopping guidance by the user, a service associated with the selection, wherein the service may include a video file of the product or a operator service.

When providing service to the user, the system may further include a product video unit 28 or an operator unit 25. The product video unit 28 is configured to provide a video file of the product associated with the selection. The operator unit 25 is configured to provide the user with operator services and may let the operator answer user's questions, handle user complaints or introduce the product in depth, etc.

In actual application, the operator unit 25 may further include an operator management module (not shown in Figure 2), an operator allocation module (not shown in Figure 2), an operator service evaluation module (not shown in Figure 2). The operator management module is configured to manage sign-in, sign-out of the operators, indicate busy status, available status of the operators, etc., and record the operator status for purpose of operator allocation. The operator allocation unit is configured to allocate the user with the operator required by the user according to the user selection and the current operator status, such as busy or available status. The operator service evaluation module is configured to record the process during which the operator provides the service and configured to provide an inspector monitoring function.

The receiving unit 21 is further configured to receive a purchase order sent by the user based on the service.

A payment unit 24 is configured to provide the user with a payment service. In particular, the payment service refers to directly charging a telephone account bonding with a calling number, or refers to paying through user specified bank, such as through a credit card, a debit card.
Optionally, the system may further include a counting unit 26 configured to count the times that the product is browsed or the times that the product is purchased and generate a product data report, or configured to count the times that a merchant is browsed or the times that a merchant is complained about and generate a merchant data report.

Optionally, the system may further include an updating unit 27 configured to receive an updated request from the merchant and update the video file for the product according to the updated request. The update process can be implemented by reference to the associated description in the method embodiment of the present disclosure.

Optionally, the above described payment unit 24 may include a verifying module 241 configured to guide the user to conduct a consumption code verification; a charging module 242 configured to inform an external network to charge the telephone account associated with the user. The external network may be a payment network capable of charging the telephone account associated with the user.

In the above system embodiment, since the user can operate over the phone, the user does not need to connect to the internet with a computer. Therefore, the system enjoys a sound operability and eliminates the necessity for computer skills and online operating skills. Consequently, the system is easy to operate. Moreover, since the video shop is based on phone domain the system has a high reliability. In addition, since the user accesses the video shop without connecting to the internet, the user won't be attacked by Internet virus and Trojan horse. Therefore, the system has a high level security. Furthermore, the updating unit in the system may update the product in the video shop upon the updated request of the merchant, thereby keeping the product updated and facilitating the merchant's daily operation. The operator unit in the system may provide operator services upon user's request, which provides additional services to the video shop and promotes user's interest in shopping.

A method for realizing a video shop is provided according to one embodiment of the present disclosure. After receiving a call request sent by the user over the phone domain and after putting through the user's call and keeping the call connected, the method according to the embodiment of the present disclosure includes providing a shopping guidance and providing a service associated with the selection made in accordance with the shopping guidance by the user and providing a payment service for the user when receiving a purchase order sent from the user based on the service.

To better present the technical solutions of the present disclosure, steps of the method according to the embodiments of the present disclosure will be described in detail in connection with reference to Figure 3. As illustrated in Figure 3, a method for providing a video shop based on phone domain is provided according to the embodiment of the present disclosure. The method includes the following steps.

Step 31: Receive a call request sent by the user over the phone domain, and get the user through and keep the user connected.

In this step, the phone domain based call request may be a call request of Integrated Service Digital Network User Part (ISUP) protocol, Session Initiation Protocol (SIP), Bearer Independent Call Control (BICC) protocol, or may be a call request of other protocols. The embodiment is not limited to the specific implementation of the call request.

Step 32: Provide a shopping guidance to the user.

In this step, the shopping guidance may be a voice shopping guidance. For instance, number 0∼9 correspond to different voice services. Of course, the shopping guidance may be a textual shopping guidance. For instance, number 0∼9 correspond to different services showing in the form of text. The shopping guidance may also be a video shopping guidance.

Step 33: Provide the user with a service associated with the selection made in accordance with the shopping guidance by the user.

The service associated with the selection may be a video file of the product or a operator service associated with the selection.

The video file may be a dynamic video file, such as video, movie, etc., or may be a static video file, such as picture.

In one example, assume that the user selects a service corresponding to number 1 and assume that the service corresponding to number 1 is sports shoes, a video file of the sports shoes is provided for the user. The video file may introduce the material of the sports shoes, the style of shorts shoes, and the pictures or video of the shorts shoes, etc. Assume that the user selects a service corresponding to number 0 and assume number 0 corresponds to operator service, then operator service is provided to the user.

Step 34: Receive a purchase order sent by the user based on the service and provide user with payment service.

In this step, the payment service provided to the user includes directly informing an external network to charge the telephone account bonding with the user. The external network may be a payment network capable of charging the telephone account associated with the user. Of course, before charging the account, user's consumption password may also be verified. After a successful verification, the external network is notified to charge the account. Of course, the above payment operation may also be conducted through a user specified bank, such as using credit card, debit card, etc.

This step may allow directly charging the telephone account bonding with the user without user re-entering the account number during payment. The payment is easy to operate.

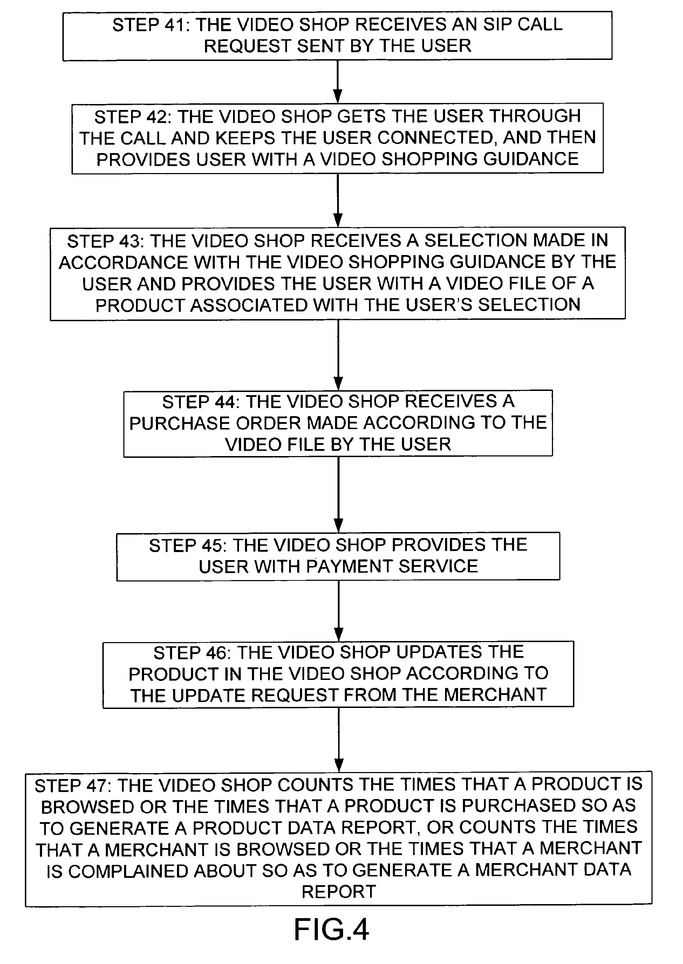

A method for providing a video shop over a phone domain is provided according to one embodiment of the present disclosure. The scenario is as follows. The shopping guidance provided according to the embodiment is a voice shopping guidance. Assume that number 0 corresponds to sports cloths, number 1 corresponds to sports shoes, and number 9 corresponds to operator service which handles customer's complaints. Of course, in actual situation, other settings might also be contemplated. For the sake of brevity, only the selection of sports cloths and sports shoes are herein illustrated as an example. The phone domain based call request according to the present embodiment is an SIP call request. In actual application, the phone domain based call request may be other call request. As shown in Figure 4, the method includes the following steps.

Step 41: The video shop receives the SIP call request sent by the user.

Step 42: The video shop provides the user with a video shopping guidance after the video shop connects the user and keeps the user connected.

The method for implementing the step may be that the video shop offers a voice guidance where number 0 represents sports cloths, number 1 represents sports shoes, and number 9 represents operator service. Before providing the user with voice shopping guidance, the step may further include providing the user with shopping notice. Likewise, such shopping notice can be in the form of voice or text.

Of course, in actual practice, the step may also include providing the user with textual shopping guidance or video shopping guidance.

Step 43: The video shop receives the selection made according to the voice shopping guidance by the user and provides the user with the video file of the product associated with the selection.

The method for implementing the step may be as follows. Assume that in this step, the user selects number 1, i.e., sports shoes, the video shop then provides user with the video file of the sports shoes. The video file may contain related information of the sports shoes, such as place of manufacture, brand, material, price, etc.

In actual application, the selection made by the user at step 43 may be number 9 which is operator service. When the operator service is selected, the video shop transfers the user to the operator service. In this embodiment, the operator service can handle user's complaints. Of course, in actual application, the operator service may also let operators introduce related information of the product and provide other service for the user. Thus, the user may make inquiry to relevant operator according to his or her own requirement, which greatly facilitates the user doing the shopping.

Step 44: The video shop receives the purchase order made according to the video file by the user.

Step 45: The video shop provides the user with a payment service after the video shop receives the purchase order from the user.

In this step, the payment service includes directly informing an external network to charge the telephone account bonding with the user. The external network may be a payment network capable of charging the telephone account associated with the user. Of course, before charging the account, user's consumption password may also be verified. After a successful verification, the external network is notified to charge the account. Of course, the above payment operation may also be conducted through a user specified bank, such as using credit card, debit card, etc. It is to be noted that the embodiment is not limited to the specific payment method.

Optionally, the above method may also include one or more of the following steps.

Step 46: The video shop may update the products in the video shop according to an updated request from the merchant.

The method of implementing this step is as follows. The video shop receives the updated request from the merchant, and receives a file of the updated product sent by the merchant. The file may be a video file, or may be a text file or audio file. The video shop then identifies the type of the updated request. If the updated request is a request for adding a new product, the video shop may store the received file of the updated product in the video shop. If the updated request is a request for replacing a product, the video shop may store the received file for the updated product in the video shop and delete the file of the product to be replaced in the video shop. If the updated request is a request for deleting a product, the video shop may delete the file of the product to be deleted. This step may allow the merchant to update the product upon request and thus keeps the product updated.

Step 47: The video shop may count the times that a product is browsed or the times that a product is purchased so as to generate a product data report, or count the times that a merchant is browsed or the times that a merchant is complained about so as to generate a merchant data report.

The above described data report may be updated by a defined time period, such as once or more times a day, a week, a month. In this step, data is gathered and a data report is formed, which greatly facilitate the merchant to operate the video shop.

There is no execution sequence between step 46 and step 47. Figure 4 defines the sequence of step 46 and step 47 only for purpose of illustration.

In the above embodiment, since the user operates over the phone, the user does not need to connect to the internet with a computer. Therefore, the system enjoys a sound operability and eliminates the necessity for computer skills and online operating skills. Consequently, the system is easy to operate. Furthermore, since the video shop is based on phone domain the system has a high reliability. In addition, since the user accesses the video shop without connecting to the internet, the user won't be attacked by Internet virus and Trojan horse. Therefore, the system has a high reliability. The method according to one embodiment of the present disclosure may also include updating the product in the video shop according to the updated request from the merchant. Thus, the product is kept updated. The method may also include counting the data and forming a data report, which greatly facilitate the merchant to manage the video shop.

The method according to one embodiment of the present disclosure has a sound operability, fine security, high reliability. Moreover, the method allows the product to be updated easily and a data report is formed by collecting the product or merchant data, thus greatly facilitate the management over the video shop. The method also provides the user with operator service upon user's request, which enriches the services offered by the video shop and promotes the user's interests in shopping.

Overall, the technical solutions provided according to various embodiments of the present disclosure are advantageous in sound operability, fine security, and high reliability. Moreover, the product is easy to be updated and the video shop is easy to operate.

The foregoing is merely exemplary embodiments of the present disclosure, while the scope of the present disclosure is not so limited. Any variations or equivalents can be readily appreciated by those skilled in the art. These variations or equivalents shall be construed as fall within the scope of the present disclosure. Therefore, the scope of the present disclosure should be determined by the scope of the claims.

## Claims

1. A method for realizing a video shop, **characterized in** comprising:
receiving a call request sent by a user over a phone domain, putting through the user's call and keeping the user connected;
providing the user with a shopping guidance and providing the user with a service associated with a selection made in accordance with the shopping guidance by the user; and
receiving a purchase order made in accordance with the service by the user and providing the user with a payment service.

2. The method of claim 1, **characterized in that,** the service associated with the selection comprises:
a video file of a product associated with the selection or a operator service associated with the selection.

3. The method of claim 1, **characterized in that,** the shopping guidance comprises:
a voice shopping guidance, a textual shopping guidance or a video shopping guidance.

4. The method of claim 1, **characterized in that,** after providing the user with the payment service, the method further comprises:
counting the times that a product is reviewed or the times that a product is purchased so as to generate a product data report; or
counting the times that a merchant is browsed or the times that a merchant is complained about so as to generate a merchant data report.

5. The method of claim 2, **characterized in that,** when the service associated with the selection is a video file of a product associated with the selection, the method further comprises:
receiving an updated request from a merchant, and updating the video file of the product according to the updated request.

6. The method of claim 5, **characterized in that,** updating the video file of the product according to the updated request comprises:
if the updated request is a request for adding a new product, receiving a video file of a newly added product and storing the video file;
if the updated request is a request for updating a product, receiving a video file of an updated product, storing the video file, and deleting a video file of an original product associated with the request for updating a product; or
if the updated request is a request for deleting a product, deleting a video file of a product associated with the request for deleting a product.

7. The method of claim 1, **characterized in that,** providing the user with the payment service comprises:
informing an external network to charge a telephone account associated with the user, wherein the external network is a payment network capable of directly charging the telephone account associated with the user; or
prompting the user to conduct a consumption password verification; informing an external network to charge the telephone account associated with the user after the verification passes, wherein the external network is a payment network capable of directly charging the telephone account associated with the user.

8. A system for realizing a video shop, **characterized in** comprising:
a receiving unit, configured to receive a call request sent by a user over a phone domain;
a connecting unit, configured to get the user through the call and keep the user connected;
a shopping guidance unit, configured to provide the user with a shopping guidance while the user is kept connected and provide the user with a service associated with a selection made in accordance with the shopping guidance by the user, wherein the receiving unit is further configured to receive a purchase order made in accordance with the service by the user; and
a payment unit, configured to provide the user with a payment service after a purchase order made in accordance with the service by the user is received.

9. The system of claim 8, **characterized in that,** the system further comprises: a product video unit or an operator unit;
the product video unit is configured to provide a video file of a product associated with the selection;
the operator unit is configured to provide the user with an operator service, and let the operator answer the user's question, handle complaints or introduce products.

10. The system of claim 8, **characterized in that,** when the service is a video file of a product, the system further comprises:
an updating unit, configured to receive an updated request from a merchant, and update a video file of a product according to the updated request.

11. The system of claim 8, **characterized in that,** the payment unit comprises:
a verifying module, configured to verify a consumption password for the user; and
a charging module, configured to inform an external network to charge a telephone account associated with the user, wherein the external network is a payment network capable of directly charging the telephone account associated with the user.
